# DEMANDE DE BREVET EUROPEEN

(11) **EP 0 829 713 A1**
(43) Date de publication de la demande: **18.03.1998**
(21) Numéro de dépôt: 97402112.3
(22) Date de dépôt: 11.09.1997
(51) Int. Cl.: G01N 27/90

(54) **Sonde à courants de Foucault, pour le contrôle non destructif de pièces électriquement conductrices**

(30) Priorité: 13.09.1996 FR 9611207
(71) Demandeur: INTERCONTROLE, 94583 Rungis Cédex (FR)
(72) Inventeur: Piriou, Marc, 94300 Vincennes (FR); Slazak, Jacky, 28700 Annay/Auneau (FR)
(74) Mandataire: Poulin, Gérard

(57) **Abrégé**

Une sonde à courants de Foucault, destinée au contrôle non destructif de pièces en matériaux électriquement conducteur, comprend quatre éléments actifs identiques (10a, 10b, 10c, 10d), dont les centres sont disposés selon un carré. Les axes principaux (18a, 18b, 18c, 18d) de ces éléments sont orientés perpendiculairement au plan du carré ou se coupent en un même point situé sur la normale au centre du carré. Les éléments actifs sont généralement des bobinages. De préférence, les bobinages opposés (10a, 10c et 10b, 10d) du carré sont connectés en série par paires, de façon à produire des champs magnétiques qui s'ajoutent selon les diagonales du carré, et les deux paires sont connectées l'une à l'autre selon un montage différentiel.

## Description

### Domaine technique

L'invention concerne une sonde à courants de Foucault destinée au contrôle non destructif de pièces de formes quelconques réalisées en un matériau électriquement conducteur.

Une telle sonde trouve de nombreuses applications dans différents domaines industriels, pour détecter localement la présence de défauts dans des pièces neuves ou usagées. A titre d'exemple nullement limitatif, la sonde à courants de Foucault selon l'invention peut être utilisée pour contrôler périodiquement les tubes des générateurs de vapeur équipant les centrales nucléaires.

### Etat de la technique

Il existe actuellement un grand nombre de sondes à courants de Foucault. Ces sondes diffèrent notamment les unes des autres par le nombre des bobinages qui les constituent, les formes et les dimensions de ces bobinages et leurs modes de connexion électrique lorsque plusieurs bobinages sont utilisés.

Les formes des bobinages dépendent notamment du type de sonde que l'on désire réaliser (sonde encerclante, sonde interne ou sonde plate). Le nombre des bobinages et leurs connexions électriques éventuelles dépendent du type de mesure effectuée (absolue ou différentielle ) et du nombre de fonctions que l'on désire voir remplir par chaque bobinage (excitation seule, mesure seule ou excitation et mesure simultanées).

De façon générale, les sondes à courants de Foucault existantes sont conçues pour une utilisation spécifique qui détermine à la fois le nombre, la forme et l'agencement des bobinages ainsi que leur mode de connexion électrique.

### Exposé de l'invention

L'invention a pour objet une sonde de contrôle ponctuel ou local, à courants de Foucault, dont la géométrie lui permet de fonctionner de différentes manières selon le mode de connexion électrique adopté, cette géométrie étant telle qu'un mode préférentiel de fonctionnement lui permet d'être particulièrement peu sensible à des variations de l'entrefer séparant la sonde de la pièce à contrôler, grâce à un niveau de bruit particulièrement bas.

Conformément à l'invention, ce résultat est obtenu au moyen d'une sonde à courants de Foucault, caractérisée par le fait qu'elle comprend quatre éléments actifs voisins, de géométries et de caractéristiques électromagnétiques sensiblement identiques, présentant des centres géométriques disposés selon un carré situé dans un plan apte à être orienté sensiblement parallèlement à une face d'une pièce à contrôler, et présentant des axes géométriques principaux qui se coupent en un point situé sur une normale à ce plan passant par le centre du carré, ou parallèles à cette normale.

En plaçant une telle sonde à proximité de la pièce à contrôler et en assurant un déplacement relatif entre le capteur et la pièce, on réalise un contrôle non destructif particulièrement peu sensible à des variations de l'entrefer. Une telle sonde peut donc être utilisée indifféremment pour contrôler des pièces planes ou présentant une certaine courbure, ainsi que des pièces tubulaires par l'intérieur ou par l'extérieur.

Dans une forme de réalisation préférentielle de l'invention, les éléments actifs sont des bobinages.

Selon un mode préférentiel de connexion électrique, les éléments actifs dont les centres géométriques sont situés à des sommets opposés du carré sont connectés en série par paires, de façon à produire des champs magnétiques qui s'ajoutent selon chaque diagonale du carré, lorsque ces paires d'éléments actifs sont parcourues par un courant électrique. Les paires d'éléments actifs sont alors connectées l'une à l'autre selon un montage différentiel.

Selon un autre mode de connexion électrique, un premier des éléments actifs est connecté à un moyen d'alimentation électrique pour former un émetteur, et les deux éléments actifs les plus proches de cet émetteur sont connectés l'un à l'autre selon un montage différentiel et reliés à un moyen de mesure pour former un récepteur. Le quatrième élément actif est alors inutilisé.

Dans ce mode de connexion, des moyens de multiplexage sont avantageusement interposés entre les éléments actifs et les moyens d'alimentation électrique et de mesure, afin que chacun des éléments actifs devienne émetteur à tour de rôle selon un cycle parcourant les sommets successifs du carré formé par ces éléments actifs. Lors d'un déplacement relatif en translation entre la sonde et la pièce, cet agencement permet d'effectuer une rotation fictive de la sonde sur elle-même autour de la normale au plan du carré passant par le centre de ce dernier.

Selon encore un autre mode de connexion, deux des éléments actifs sont connectés selon un montage différentiel alors que les deux autres éléments actifs sont inutilisés. La sonde fonctionne alors à la manière d'une sonde différentielle classique à deux bobinages.

Dans ce mode de connexion, des moyens de multiplexage peuvent aussi être interposés entre les éléments actifs et les moyens d'alimentation électrique et de mesure, afin qu'au moins deux paires d'éléments actifs présentant des orientations différentes soient connectées à tour de rôle, selon des montages différentiels. Lors d'un déplacement relatif en translation entre la sonde et la pièce, cet agencement permet, là encore, de simuler une rotation de la sonde sur elle-même pour détecter des défauts d'orientations différentes.

Selon encore un autre mode de connexion, les éléments actifs dont les centres géométriques sont situés à des sommets opposés du carré sont connectés par paire selon deux montages différentiels, de façon à former deux capteurs distincts sensibles à des défauts d'orientations différentes.

Dans ce mode de connexion électrique, des moyens de multiplexage sont aussi avantageusement interposés entre les capteurs et les moyens d'alimentation électrique et de mesure, afin que les deux capteurs soient mis en oeuvre séquentiellement.

Une rotation de la sonde sur elle-même est là encore simulée lors du déplacement relatif en translation entre la sonde et la pièce.

### Brève description des dessins

On décrira à présent, à titre d'exemples non limitatifs, différentes formes de réalisation de l'invention, en se référant aux dessins annexés, dans lesquels :
- la figure 1 est une vue de dessus représentant uniquement les éléments actifs d'une sonde à courants de Foucault conforme à l'invention ;
- la figure 2 est une vue en coupe selon la ligne II-II de la figure 1 ;
- la figure 3 est une vue comparable à la figure 2 illustrant une variante de réalisation ;
- la figure 4 est un schéma électrique illustrant un premier mode de connexion des éléments actifs de la sonde selon l'invention ;
- la figure 5 est un schéma représentant une sonde dans laquelle l'excitation des éléments actifs et la mesure s'effectuent au travers de moyens de multiplexage ;
- la figure 6 illustre quatre étapes successives du fonctionnement de la sonde de la figure 5, selon un deuxième mode de connexion de ses éléments actifs ;
- la figure 7 illustre trois étapes successives du fonctionnement de la sonde de la figure 5 selon un troisième mode de connexion de ses éléments actifs ; et
- la figure 8 illustre un quatrième mode de connexion des éléments actifs de la sonde selon l'invention.

### Exposé détaillé de formes de réalisation préférentielles

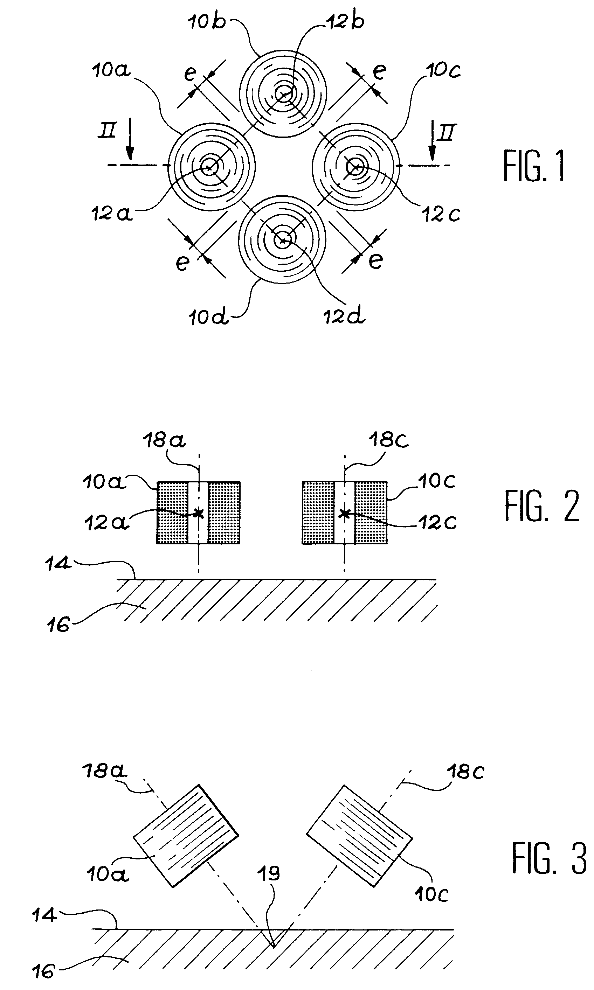

Les figures 1 et 2 illustrent l'agencement géométrique des éléments actifs d'une sonde ponctuelle ou locale à courants de Foucault conforme à l'invention. Cette sonde comprend quatre éléments actifs voisins, de géométries et de caractéristiques électromagnétiques sensiblement identiques. Ces élément actifs sont désignés respectivement par les références 10a, 10b, 10c et 10d sur la figure 1. Comme on l'a illustré sur cette figure, les centres géométriques 12a, 12b, 12c et 12d de ces éléments actifs sont disposés de façon à former les sommets consécutifs d'un carré situé dans un plan prévu pour être orienté sensiblement parallèlement à une face 14 d'une pièce 16 à contrôler (figure 2).

Dans la forme de réalisation illustrée sur les figures 1 et 2, les axes géométriques principaux 18a, 18b, 18c et 18d des éléments actifs 10a, 10b, 10c et 10d sont sensiblement parallèles entre eux et perpendiculaires au plan du carré 12a, 12b, 12c, 12d.

Dans une variante de réalisation illustrée schématiquement sur la figure 3, ces axes principaux 18a, 18b, 18c et 18d sont tous concourants en un même point 19 situé sur la normale au plan du carré 12a, 12b, 12c, 12d passant par le centre de ce carré.

Les éléments actifs 10a, 10b, 10c et 10d de la sonde selon l'invention sont constitués avantageusement par des bobinages, généralement cylindriques. Ils peuvent aussi être formés de bobinages et de noyaux de ferrite associés à ces bobinages.

Les dimensions des éléments actifs peuvent varier selon l'application envisagée. Dans tous les cas, l'écartement e (figure 1) entre les éléments actifs voisins est très faible par rapport au diamètre de ces éléments. A titre d'exemple, l'écartement e entre des éléments actifs voisins d'environ 2 mm de diamètre peut être d'environ 0,13 mm.

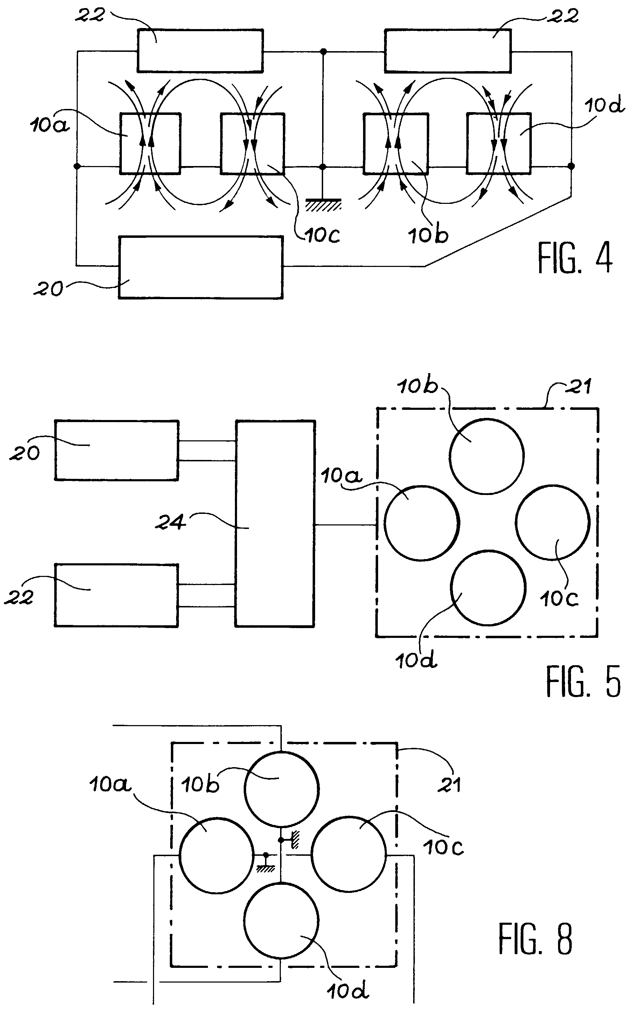

Les quatre éléments actifs de la sonde sont noyés dans un bloc support électriquement isolant (représenté par un trait mixte 21 sur les figures 5 à 8). Ce bloc support est conçu pour être déplacé relativement à la pièce 16 à contrôler, de façon à effectuer un balayage de l'ensemble de la surface 14 de cette pièce. Au cours de ce déplacement, qui peut consister en une translation rectiligne ou en un mouvement plus complexe, l'entrefer séparant les éléments actifs 10a, 10b, 10c et 10d de la surface 14 de la pièce reste relativement constant. Il peut cependant subir des variations non négligeables dans certaines applications.

Comme on va à présent le décrire en se référant successivement aux figures 4 à 8, les quatre éléments actifs 10a, 10b, 10c et 10d peuvent être connectés selon différents modes adaptés à des utilisations différentes de la sonde.

Dans un mode de connexion préférentielle illustré sur la figure 4, les liaisons électriques sont réalisées de façon à effectuer une mesure différentielle et de telle sorte que chacun des éléments actifs agisse à la fois comme élément émetteur ou d'excitation et comme élément récepteur ou de mesure.

Plus précisément, dans ce mode de connexion préférentielle illustré sur la figure 4, les éléments actifs 10a et 10c d'une part et les éléments actifs 10b et 10d, d'autre part, dont les centres géométriques sont situés à des sommets opposés du carré, sont connectés en série par paires. Cette connexion est réalisée de telle sorte que le courant électrique qui alimente chacune des deux paires d'éléments actifs 10a, 10c et 10b, 10d ainsi formées produise des champs magnétiques qui s'ajoutent selon chacune des diagonales du carré, comme on l'a illustré schématiquement par des lignes de champs sur la figure 4.

Par ailleurs, les deux paires d'éléments actifs 10a, 10c et 10b, 10d sont connectées l'une à l'autre selon un montage différentiel conventionnel bien connu des spécialistes.

On a également représenté sur la figure 4 les moyens d'alimentation 20 qui délivrent le courant électrique d'excitation des éléments actifs de la sonde et les moyens de lecture 22 qui reçoivent et traitent les signaux aux bornes de chacune des paires d'éléments actifs 10a, 10c et 10b, 10d.

Lorsque les éléments actifs de la sonde sont connectés selon le premier mode de connexion qui vient d'être décrit en se référant à la figure 4, un déplacement relatif entre la sonde et la pièce, sensiblement parallèlement à la surface de cette dernière, permet d'effectuer un contrôle non destructif de la pièce d'une manière relativement peu sensible à la valeur de l'entrefer. Une sonde de ce type est donc particulièrement adaptée au contrôle de pièces présentant une surface évolutive ou lorsque le déplacement relatif entre la sonde et la pièce ne permet pas le maintien d'un entrefer constant tout au long de la mesure.

Dans le mode de connexion de la figure 4, la sonde selon l'invention est pratiquement insensible à la présence de défauts orientés parallèlement aux côtés du carré 12a, 12b, 12c, 12d. Toutefois, cet inconvénient peut être évité en assurant un déplacement de la sonde combinant une translation et une rotation autour d'un axe confondu avec la normale au plan 12a, 12b, 12c, 12d, passant par le centre du carré.

Dans un deuxième mode de connexion des éléments actifs 10a, 10b, 10c et 10d de la sonde, l'un de ces éléments actifs est utilisé comme émetteur et les deux éléments actifs les plus proches de cet élément actif émetteur sont utilisés comme récepteurs. Le quatrième élément actif est alors inutilisé. A titre d'exemple, si l'élément actif utilisé comme émetteur est l'élément 10a et les éléments actifs utilisés comme récepteurs les éléments 10b et 10d, on connecte l'élément actif 10a aux moyens d'alimentation électrique 20 (figure 5) et on connecte les éléments actifs 10b et 10d en opposition aux moyens de mesure 22, selon un montage différentiel traditionnel.

Comme l'illustre schématiquement la figure 5, on peut avantageusement interposer des moyens de multiplexage 24 entre les éléments actifs 10a, 10b, 10c, 10d d'une part et les moyens d'alimentation électrique 20 et de mesure 22 d'autre part. Cet agencement permet, lors du déplacement en translation de la sonde par rapport à la pièce, d'effectuer de façon fictive un balayage circulaire par la mise en oeuvre des moyens de multiplexage 24.

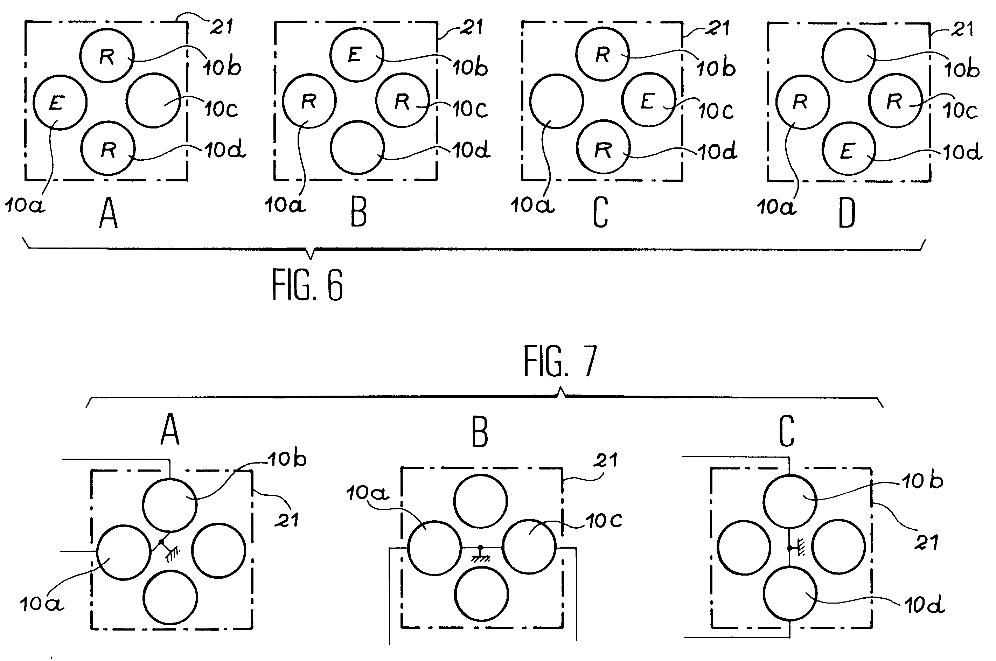

Plus précisément et comme l'illustre schématiquement la figure 6, les bobinages centrés sur les sommets voisins du carré deviennent tour à tour émetteurs. Ils sont repérés par la lettre E. Les deux bobinages voisins de ce bobinage émetteur E sont à chaque fois récepteurs. Ils sont repérés par la lettre R. Ainsi, la figure 6 montre en A, B, C et D quatre états successifs de la sonde dans lesquels chacun des éléments actifs 10a, 10b, 10c et 10d est tour à tour émetteur E, selon un cycle parcourant les sommets successifs du carré formé par ces éléments actifs. Dans ces états A à D, les éléments actifs récepteurs R sont respectivement les éléments 10b et 10d, les éléments 10c et 10a, les éléments 10d et 10b et les éléments 10a et 10c. A chaque fois, le quatrième élément actif, respectivement 10c, 10d, 10a et 10b, reste inutilisé.

Comme on l'a illustré respectivement en A, B et C sur la figure 7, dans un troisième mode de connexion électrique des éléments actifs 10a, 10b, 10c et 10d de la sonde, seuls deux quelconques de ces éléments sont connectés électriquement entre eux selon un montage différentiel. Les deux autres éléments actifs sont alors inutilisés. Dans cet agencement, les deux éléments actifs connectés électriquement entre eux forment un capteur différentiel classique à deux bobinages, relié électriquement à la fois aux moyens d'alimentation électrique et aux moyens de mesure (non représentés).

Selon que les éléments actifs qui sont reliés électriquement sont des éléments centrés sur des sommets voisins du carré, tels que les éléments 10a et 10b comme on l'a illustré en A, ou des éléments actifs centrés sur des sommets opposés, tels que les éléments 10a et 10c ou 10b et 10d, comme on l'a illustré en B et C, l'orientation du capteur ainsi formé n'est pas la même.

Plus précisément, on voit en A, B et C sur la figure 7 que des capteurs formés par la connexion de deux éléments actifs voisins tels que les éléments 10a et 10b ou par la connexion de deux éléments actifs opposés tels que les éléments 10a et 10c ou les éléments 10b et 10d présentent des orientations à 90° ou à 45° les uns par rapport aux autres.

En adoptant une configuration analogue à celle illustrée sur la figure 5, c'est-à-dire en interposant des moyens de multiplexage 24 entre les éléments actifs d'une part et les moyens d'alimentation électrique 20 et de mesure 22 d'autre part, on peut faire passer successivement la sonde dans des états identiques ou analogues à ceux qui sont illustrés en A, B et C sur la figure 7. Cet agencement permet alors d'assurer une rotation fictive de la sonde autour d'un axe perpendiculaire au plan 12a, 12b, 12c, 12d et passant par le centre du carré, lors d'un déplacement de la sonde en translation par rapport à la pièce.

Enfin et comme on l'a représenté schématiquement sur la figure 8, dans un autre mode de connexion des éléments actifs de la sonde, les éléments actifs 10a et 10c d'une part et 10b et 10d d'autre part, dont les centres géométriques sont situés à des sommets opposés du carré, sont connectés par paires selon deux montages différentiels. On forme ainsi, à l'intérieur de la même sonde, deux capteurs distincts orientés à 90° l'un de l'autre. Selon l'application envisagée, ces deux capteurs 10a, 10c et 10b, 10d peuvent être mis en oeuvre soit simultanément, soit de façon séquentielle. Dans ce dernier cas, on a recours à des moyens de multiplexage 24 interposés entre les éléments actifs d'une part et les moyens d'alimentation électrique 20 et de mesure 22 d'autre part, comme l'illustre la figure 5.

La description qui précède montre que l'agencement des éléments actifs de la sonde conforme à l'invention permet d'envisager des modes de connexion variés selon l'application envisagée, tout en présentant des avantages intrinsèques importants lorsqu'elle est utilisée dans son mode de connexion préférentielle illustré sur la figure 4.

## Revendications

1. Sonde à courants de Foucault, caractérisée par le fait qu'elle comprend quatre éléments actifs (10a à 10d) voisins, de géométries et de caractéristiques électromagnétiques sensiblement identiques, présentant des centres géométriques (12a à 12d) disposés selon un carré situé dans un plan apte à être orienté sensiblement parallèlement à une face d'une pièce à contrôler, et présentant des axes géométriques principaux (18a à 18d) qui se coupent en un point (19) situé sur une normale à ce plan passant par le centre du carré, ou parallèles à cette normale.

2. Sonde selon la revendication 1, dans laquelle les éléments actifs sont des bobinages (10a à 10d).

3. Sonde selon l'une quelconque des revendications 1 et 2, dans laquelle les éléments actifs (10a,10c ; 10b,10d) dont les centres géométriques sont situés à des sommets opposés du carré sont connectés en série par paires, de façon à produire des champs magnétiques qui s'ajoutent selon chaque diagonale du carré, lorsque ces paires d'éléments actifs sont parcourues par un courant électrique, et dans laquelle les paires d'éléments actifs sont connectées l'une à l'autre selon un montage différentiel.

4. Sonde selon l'une quelconque des revendications 1 et 2, dans laquelle un premier des éléments actifs (10a à 10d) est connecté à un moyen d'alimentation électrique (20) pour former un émetteur (E), les deux éléments actifs les plus proches de cet émetteur étant connectés l'un à l'autre selon un montage différentiel et reliés à un moyen de mesure (22) pour former un récepteur (R), et le quatrième élément actif étant inutilisé.

5. Sonde selon la revendication 4, dans laquelle des moyens de multiplexage (24) sont interposés entre les éléments actifs (10a à 10d) et les moyens d'alimentation électrique (20) et de mesure (22), afin que chacun des éléments actifs devienne émetteur à tour de rôle selon un cycle parcourant les sommets successifs du carré formé par ces éléments actifs.

6. Sonde selon l'une quelconque des revendications 1 et 2, dans laquelle deux des éléments actifs (10a à 10d) sont connectés électriquement entre eux selon un montage différentiel, les deux autres éléments actifs étant inutilisés.

7. Sonde selon la revendication 6, dans laquelle des moyens de multiplexage (24) sont interposés entre les éléments actifs (10a à 10d) et des moyens d'alimentation électrique (20) et de mesure (22), afin qu'au moins deux paires d'éléments actifs présentant des orientations différentes soient connectées à tour de rôle, selon un montage différentiel.

8. Sonde selon l'une quelconque des revendications 1 et 2, dans laquelle les éléments actifs (10a à 10d) dont les centres géométriques sont situés à des sommets opposés du carré sont connectés par paire selon deux montages différentiels, de façon à former deux capteurs distincts.

9. Sonde selon la revendication 8, dans laquelle des moyens de multiplexage (24) sont interposés entre les éléments actifs (10a à 10d) et des moyens d'alimentation électrique (20) et de mesure (22), afin que les deux capteurs soient mis en oeuvre séquentiellement.
